# EUROPEAN PATENT APPLICATION

(11) **EP 4 848 108 A1**
(43) Date of publication of application: **02.12.2026**
(21) Application number: 24920247.4
(22) Date of filing: 22.08.2024
(51) Int. Cl.: G06F 16/90, G06F 16/903, G06F 16/9035

(54) **LANGUAGE MODEL UTILIZATION SYSTEM AND LANGUAGE MODEL UTILIZATION METHOD**

(30) Priority: 26.01.2024 JP 2024010072
(71) Applicant: Nomura Research Institute, Ltd., Chiyoda-ku Tokyo 100-0004 (JP)
(72) Inventor: KAWAGUCHI Masashi, Tokyo 100-0004 (JP)
(74) Representative: Hoffmann Eitle
(86) International application number: PCT/JP2024/029805
(87) International publication number: WO 2025/158698

(57) **Abstract**

To enable prompt engineering to be appropriately performed even in a case where confidential information or the like is included in accumulated external knowledge of an LLM.

A language model use system (1) that inputs text of a prompt (6) designated by a user (5) to a language model (4) and outputs a response (7) obtained from the language model (4) to the user (5) includes a knowledge holding unit (3) that accumulates information relating to knowledge, acquires, based on the prompt (6), knowledge related or similar to the prompt (6) from the knowledge holding unit (3), and inputs the knowledge and the prompt (6) together to the language model (4) to obtain a response (7).

## Description

### Technical Field

The present invention relates to a technology for using generative AI and large language models (LLMs), and particularly relates to a technology effective when applied to a language model use system and a language model use method that perform so-called prompt engineering.

### Background Art

In recent years, LLMs that have manifested astonishing dialogue capability and comprehension capability, including ChatGPT (registered trademark), have become available. However, when causing an LLM to perform highly specialized dialogue or a task (for example, summarization of a text, creation of Q&A, text generation, or the like), learning of a downstream task specialized for a target field/domain is necessary. Therefore, performing optimal additional learning is essential in order to utilize an LLM in business.

While there are multiple methods for causing an LLM to perform additional learning, what type of method can be adopted depends on the disclosure method of each LLM model. For example, for an LLM for which the model itself is disclosed and commercial use is permitted, various additional learning methods can be adopted; however, for an LLM for which only an application programming interface (API) is disclosed, updates of parameters and the like are limited to a range that can be performed or accessed through the API.

When architectures such as a recurrent neural network (RNN) and a long short term memory (LSTM) were mainstream in natural language models, causing learning from zero again for each downstream task or domain was common. Thereafter, after models of machine learning methods based on so-called Transformer-based natural language processing models such as bidirectional encoder representations from transformers (BERT), generative pretrained transformer (GPT), and bidirectional auto-regressive transformer (BART) appeared, a method was established in which learning is performed by dividing learning into two steps: a pretraining step of constructing a base model having general understanding relating to language, and a step of performing additional learning (fine-tuning) on the base model for a specific domain.

However, as a result of language models becoming remarkably large in scale due to the rise of LLMs in recent years, the number of parameters to be fine-tuned and the size of data used for learning have become enormous, and conventional fine-tuning that updates all parameters has become practically difficult in terms of computational resources. Furthermore, in a case where there is no access right to parameters, such as a case where a trained model is not disclosed and cannot be accessed by an API or the like, fine-tuning that updates all parameters cannot be performed in the first place.

In contrast, so-called prompt engineering (In-Context Learning) has also been studied, in which, instead of updating parameters, the content of an input (prompt) when causing an LLM to perform dialogue or a task is optimized, or information such as an additional prompt, parameters, or task examples is inserted, so that dialogue is performed while giving unknown knowledge to the LLM. As a result, for example, the latest knowledge not included in data used during pretraining can be given to the LLM, and obsolescence of learned knowledge can be resolved.

As a related technology, for example, Non Patent Literature 1 describes a Retriever-Reader model including a Retriever that vectorizes a question from a user and searches for documents related to the question from among a large number of documents (including unknown knowledge) on the basis of vector similarity, and a Reader that concatenates a related document searched by the Retriever and a question sentence, gives the concatenated related document and question sentence as input to a language model, and extracts or generates an answer.

### Citation List

### Non Patent Literature

Non Patent Literature 1: Ayaka Yomogida and seven others, "Verification of a Retriever-Reader Model for Utilizing Technical Knowledge", Proceedings of the 29th Annual Meeting of the Association for Natural Language Processing, March 2023, pp. 2030-2033

### Summary of Invention

### Technical Problem

While there is a restriction on the length (number of tokens) of a prompt that can be input to an LLM, in a case where there is an enormous amount of external knowledge to be additionally learned, according to the conventional technology, prompt engineering in which a related document is extracted from the enormous amount of external knowledge, concatenated with a question sentence, and given to the LLM as a prompt makes possible dialogue and obtaining an answer while giving unknown knowledge to the LLM.

However, among accumulated external knowledge of an LLM, some knowledge, such as confidential information within a company, cannot be leaked to the outside, and some knowledge is inappropriate to input to an open LLM available as software as a service (SaaS).

Accordingly, an object of the present invention is to provide a language model use system and a language model use method capable of appropriately performing prompt engineering even in a case where confidential information or the like is included in accumulated external knowledge of an LLM.

The foregoing and other objects and novel features of the present invention will become apparent from the description of the present specification and the accompanying drawings.

### Solution to Problem

Among the inventions disclosed in the present application, an outline of a representative invention will be briefly described as follows.

A language model use system that is a representative embodiment of the present invention is a language model use system that inputs text of a prompt designated by a user to a language model and outputs a response obtained from the language model to the user, the language model use system including a knowledge holding unit that accumulates information relating to knowledge, in which the language model use system, based on the prompt, acquires knowledge related or similar to the prompt from the knowledge holding unit, and inputs the knowledge and the prompt together to the language model to obtain a response.

The present invention can also be applied to a method executed in the language model use system as described above.

### Advantageous Effects of Invention

Among the inventions disclosed in the present application, effects obtained by a representative invention will be briefly described as follows.

That is, according to a representative embodiment of the present invention, prompt engineering can be appropriately performed even in a case where confidential information or the like is included in accumulated external knowledge of an LLM.

### Brief Description of Drawings

Fig. 1 illustrates an overview of a configuration example of a language model use system according to an embodiment of the present invention.
Fig. 2 illustrates an overview of an example of prompt engineering according to an embodiment of the present invention.
Fig. 3 illustrates an overview of another example of prompt engineering according to an embodiment of the present invention.
Fig. 4 illustrates an overview of another example of prompt engineering according to an embodiment of the present invention.

### Description of Embodiments

Hereinafter, embodiments of the present invention will be described in detail with reference to the drawings. In all drawings for explaining the embodiments, the same portions are denoted by the same reference signs in principle, and repeated description thereof will be omitted. On the other hand, regarding a part described with a reference sign in one drawing, there may be a case where the part is not illustrated again when another drawing is described but is referred to with the same reference sign.

### <Overview>

In a language model use system according to an embodiment of the present invention, in a mechanism in which a prompt (a question, consultation, or the like) input by a user is input to an LLM to obtain a response inferred and generated by the LLM, when inputting the prompt to the LLM, additional information is acquired from knowledge independently accumulated outside the LLM and is input together with the prompt. This enables prompt engineering (In-Context Learning) that gives knowledge unknown to the LLM in advance to be performed, thereby facilitating obtaining a desired response.

The independently accumulated knowledge includes, for example, documents relating to expert knowledge, various in-house documents, and data of e-mails or chats between employees, which include confidential information that should be prevented from leaking to the outside. Articles, comments, posts, and the like about general topics such as sports, fashion, and games, for which no problem arises even when leaked to the outside (including materials acquired from outside), may be included. In addition, not only knowledge unknown to the LLM but also known (learned) information may be included.

### <System Configuration>

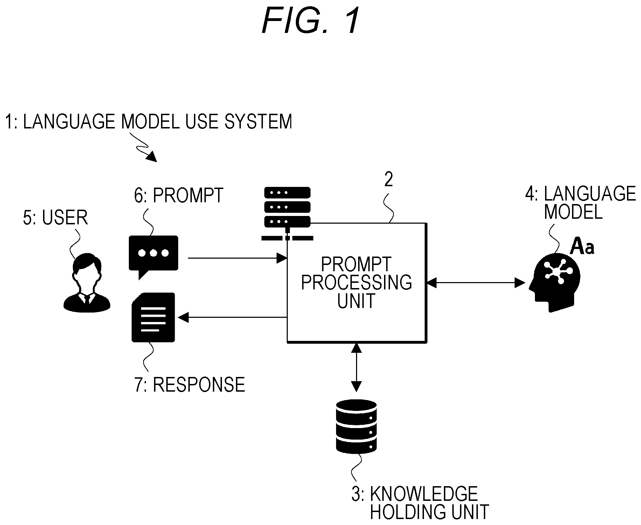

Fig. 1 illustrates an overview of a configuration example of a language model use system according to an embodiment of the present invention. A language model use system 1 is constituted by, for example, a server device, a virtual server constructed on a cloud computing service, a PC, or the like, and implements various functions relating to use of an LLM and implementation of prompt engineering by causing an unillustrated central processing unit (CPU) to execute an operating system (OS), a database management system (DBMS), middleware such as a Web server program, and software running on the middleware, which are loaded into memory from a recording device such as a hard disk drive (HDD) or a solid state drive (SSD).

The language model use system 1 includes, for example, a prompt processing unit 2 implemented as software. The language model use system 1 also includes a knowledge holding unit 3 that is a database holding independently accumulated knowledge.

The prompt processing unit 2 receives a prompt 6 input from a user 5, acquires information on knowledge related or similar to a topic relating to the prompt 6 from the knowledge holding unit 3, inputs the information together with the prompt 6 to a language model 4 such as an LLM, and outputs an obtained response 7 to the user 5; that is, the prompt processing unit 2 has an interface function in use of an LLM and a function relating to prompt engineering at that time. For example, ChatGPT can be used as the language model 4, and the prompt processing unit 2 can be constructed using a framework for implementing an application that applies a language model, such as LlamaIndex or LangChain, but the language model 4 and the prompt processing unit 2 are not limited to such examples. Details of processing by the prompt processing unit 2 will be described later.

The knowledge holding unit 3 is a vector database that holds information of independently accumulated knowledge as vector data, which is a form easy to use in machine learning, and various types such as Vector Storage can be used. A configuration using a key-value database instead of a vector database is also possible.

The information of knowledge accumulated in the knowledge holding unit 3 is not limited to vector data, and may be text data. In this case, processing in the prompt processing unit 2 of extracting, from the knowledge holding unit 3, knowledge similar to the prompt 6 input from the user 5 is performed on a text basis, and a configuration is provided in which the extracted similar knowledge and the prompt 6 are input to the language model 4 to obtain a response. At this time, for example, a configuration may be used in which the similar knowledge, or the text data relating to the similar knowledge and the prompt 6, is presented to the user 5 and then input to the language model 4. Furthermore, a configuration may be used in which only knowledge designated by the user 5 among the similar knowledge is input to the language model 4.

Security measures (such as encryption) are desirably taken in the knowledge holding unit 3 and the prompt processing unit 2 so that text data is not learned by a third party. Alternatively, instead of a database or text data, a language model independent from the language model 4 may be used, the language model outputting knowledge having a high similarity (such as cosine similarity) to the content of the prompt 6 input from the user 5, or having a strong relation to the content. As the language model independent from the language model 4 mentioned here, for example, a BERT-based model specialized for a Retriever is conceivable. Multiple kinds of such language models and databases or text data may be combined to output highly related knowledge.

### <Prompt Engineering>

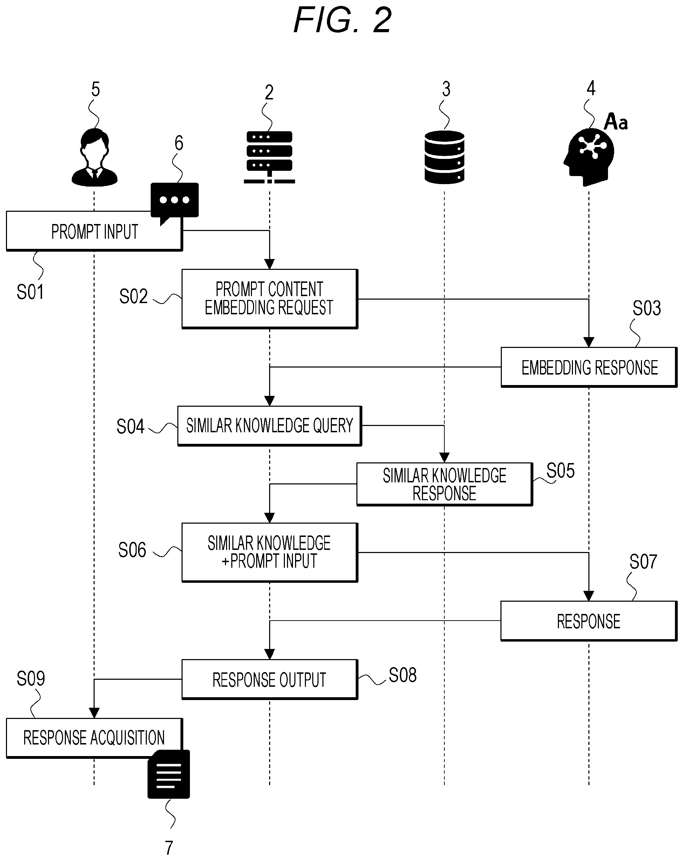

Fig. 2 illustrates an overview of an example of prompt engineering according to an embodiment of the present invention. Here, an example of a basic processing flow in the present embodiment is shown.

First, the user 5 accesses the language model use system 1 and inputs the prompt 6 (a question, consultation, or the like) (S01). In the prompt processing unit 2 of the language model use system 1, the content (words or phrases) of the input prompt 6 is converted into a vector representation (so-called "embedding"). In the present embodiment, a request for embedding into a vector representation is issued to the language model 4 (S02), the prompt 6 is vectorized by the function of the language model 4, and a response thereto is obtained (S03). A configuration may be used in which, without relying on the function of the language model 4, for example, a vectorization tool included in a data management function of the knowledge holding unit 3, another tool that vectorizes words or phrases of the prompt 6 by natural language processing, or the like is used.

Thereafter, the prompt processing unit 2 queries the knowledge holding unit 3 for similar knowledge based on the returned embedding (S04), and obtains a response from the knowledge holding unit 3 (S05). Here, from vector data of knowledge accumulated and held in the knowledge holding unit 3, a certain number of items having vectors similar to the embedding of the prompt 6 are extracted as similar knowledge. As a result, information relating to knowledge on a topic close to the content of the prompt 6 can be extracted.

As described above, a configuration may be used in which similar knowledge extracted from the knowledge holding unit 3 is converted into text and presented to the user 5 (a well-known and commonly used technique for converting vector data into text may be adopted, and a language model may be queried), and only knowledge designated by the user 5 is used in subsequent processing, thereby enabling unnecessary knowledge to be deleted and enabling a response desired by the user 5 to be obtained from the language model 4. At that time, security measures (such as encryption) are desirably taken so that text data is not learned by a third party.

Then, the vector obtained as similar knowledge and the prompt 6 are input together to the language model 4 (S06), and a response is obtained from the language model 4 (S07). In the prompt processing unit 2, the obtained response is output to the user 5 (S08), and the user 5 obtains the obtained response as the response 7 (S09). This makes possible giving, to the language model 4, independent knowledge unknown to the language model 4 together with the prompt 6, and obtaining the response 7 based on the independent knowledge and the prompt 6. By re-embedding the response from the language model 4 acquired by the prompt processing unit 2 in step S07 and recursively repeating the series of processing from step S04 onward, the accuracy of the response 7 can be further improved.

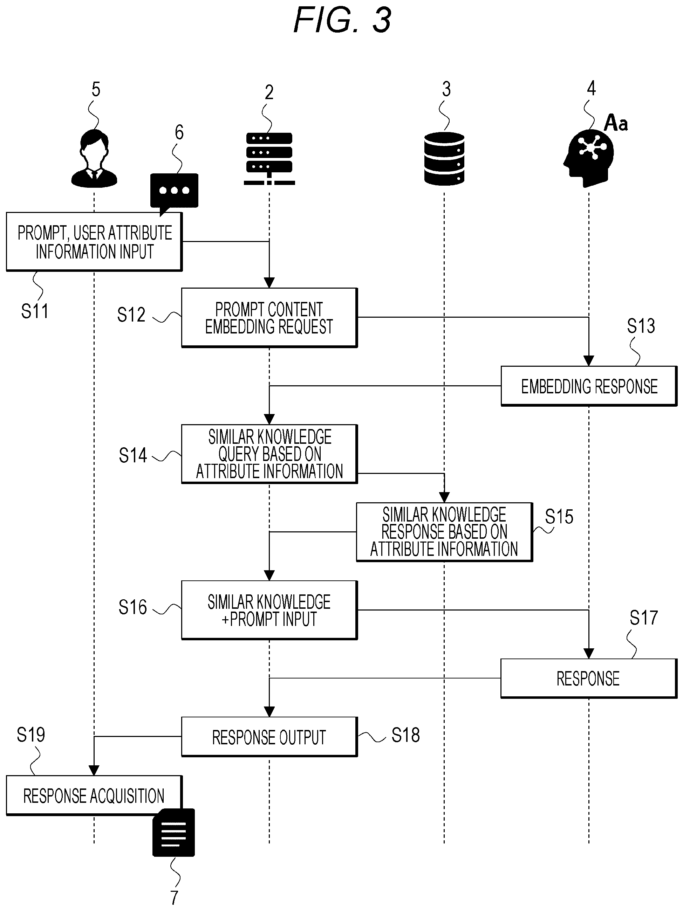

Fig. 3 illustrates an overview of another example of prompt engineering according to an embodiment of the present invention. Here, an example of a case of implementing prompt engineering based on attribute information of the user 5 on the basis of the basic processing shown in the example of Fig. 2 described above is shown.

First, similarly to the example of Fig. 2, the user 5 accesses the language model use system 1 and inputs the prompt 6, and at that time, also inputs attribute information of the user 5 (S11). The attribute information of the user 5 includes, for example, information on authority that the user 5 has in an organization, personal data, other personal information, and the like. Such attribute information may be present in the local environment of the user 5, such as a Cookie, or may be stored in a database on the server side including the language model use system 1.

Thereafter, similarly to the example of Fig. 2, in the prompt processing unit 2 of the language model use system 1, a request for embedding into a vector representation is issued to the language model 4 with respect to the content of the input prompt 6 (S12), and a response of the embedding is obtained from the language model 4 (S13).

Thereafter, the prompt processing unit 2 queries the knowledge holding unit 3 for similar knowledge based on the returned embedding (S14), and obtains a response from the knowledge holding unit 3 (S15). At that time, in the example of Fig. 3, similar knowledge is obtained based on the attribute information of the user 5 input in step S11. For example, when a genre or field of interest is designated as personal information of the user 5 in the attribute information, among vector data of knowledge accumulated and held in the knowledge holding unit 3, knowledge similar to the prompt 6 is extracted from knowledge matching the genre or the like (or having a high similarity (such as cosine similarity), or having a strong relation).

In addition, when information on authority of the user 5 is designated in the attribute information, from among vector data of knowledge accumulated and held in the knowledge holding unit 3, knowledge similar to the prompt 6 is extracted from knowledge to which access is permitted by the authority. The vector database of the knowledge holding unit 3 may be constructed as separate databases (tables) for different genres or fields (for example, fashion, sports, games,... and the like) and different authorities (confidentiality levels), or may be constructed as one database (table) as a whole. When the vector database is constructed as one database as a whole, for example, metadata indicating a genre, an authority, or the like is added as a column so that identification can be performed. On the other hand, when separate databases are constructed for different genres or authorities, vector data having a predetermined rank or higher is extracted from vector data returned from the databases of the genres or authorities.

An access authority for vector data of each piece of knowledge accumulated and held in the knowledge holding unit 3 may be set as p (p = {0, 1}), a similarity to the prompt 6 input from the user 5 may be set as r, calculation of p × r may be performed, and whether to extract the vector data of the knowledge may be determined based on the calculation result.

Thereafter, similarly to the example of Fig. 2, a vector obtained as similar knowledge and the prompt 6 are input together to the language model 4 (S16), and a response is obtained from the language model 4 (S17). In the prompt processing unit 2, the obtained response is output to the user 5 (S18), and the user 5 obtains the obtained response as the response 7 (S19). Similarly to the example of Fig. 2, by re-embedding the response from the language model 4 acquired by the prompt processing unit 2 in step S17 and repeating the series of processing from step S14 onward, the accuracy of the response 7 can be further improved.

As described above, extracting similar knowledge based on the attribute information input by the user 5 facilitates obtaining the response 7 personalized in a form related to an interest target of the user 5. In addition, by extracting similar knowledge from information in a range in which access is permitted (access authority exists) based on the authority of the user 5, the response 7 to the prompt 6 can be obtained while security is maintained without causing confidential information to be learned by updating parameters of the language model 4. From the viewpoint of maintaining security, instead of the method described above, maintaining security is also possible by using, as the language model 4, an in-house non-public language model rather than an external language model.

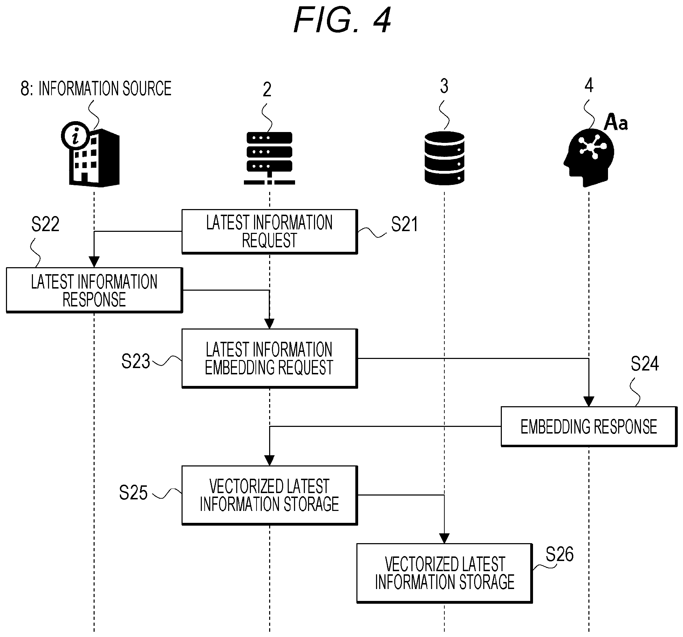

Fig. 4 illustrates an overview of another example of prompt engineering according to an embodiment of the present invention. Here, an example is shown in which, as advance preparation before the processing shown in the examples of Fig. 2 and Fig. 3 described above is performed, latest information and knowledge unknown to the language model 4 are collected and accumulated, and the response 7 based on the latest information and knowledge can be provided to the user 5.

The prompt processing unit 2 of the language model use system 1 regularly or irregularly accesses an external information source 8 to request acquisition of latest information (S21), and acquires the latest information returned in response (S22). The specific method for the request and response for acquiring the latest information is not particularly limited, and according to specifications, an interface, or the like of the information source 8, for example, the information may be acquired using a disclosed API, or information may be acquired by scraping from a Web site. As the information source 8, for example, various information provision sites, services, repositories, and the like can be targeted, such as a news site, a stock price site, or a chat service from which conversation logs disclosed only within a company can be acquired. When the latest information is acquired, information on an acquisition date and time may be added. As a result, even information on the same topic can be handled as history information that differs in chronological order.

Thereafter, in the prompt processing unit 2 of the language model use system 1, a request for embedding into a vector representation is issued to the language model 4 with respect to the acquired latest information (S23), and a response of the embedding is obtained from the language model 4 (S24). Then, the embedded latest information is stored in the vector database of the knowledge holding unit 3 (S25, S26). As a result, when the response 7 to the prompt 6 is output to the user 5 in the processing of the examples of Fig. 2 and Fig. 3 described above, the response 7 based on latest information unknown to the language model 4 can be output.

As described above, when the latest information is stored in the knowledge holding unit 3, the latest information can be handled as history information on the same topic by adding information on the acquired date and time. In this case, for example, when the user 5 inputs the prompt 6 in the processing of step S01 in the example of Fig. 2 described above, the user 5 designates a point in time of knowledge on which the response 7 is to be based. Then, when the prompt processing unit 2 queries the knowledge holding unit 3 for similar knowledge in the processing of step S04, information on the point in time designated by the user 5 is added, and similar knowledge is extracted from the knowledge holding unit 3 using the latest information at the designated point in time. As a result, for example, even a question for which an answer based on latest information at a specific point in the past is required can be appropriately answered.

As described above, according to the language model use system 1 that is an embodiment of the present invention, when the prompt 6 is input to the language model 4, additional information is acquired from knowledge independently accumulated in the knowledge holding unit 3 and is input together with the prompt 6, so that prompt engineering that gives knowledge unknown to the language model 4 in advance can be performed, thereby facilitating obtaining a desired response.

Although the invention made by the present inventors has been specifically described above based on the embodiments, the present invention is not limited to the above embodiments, and needless to say, various modifications can be made without departing from the gist of the present invention. In addition, the above embodiments have been described in detail in order to explain the present invention in an easy-to-understand manner, and are not necessarily limited to embodiments including all described configurations. In addition, with respect to some of the configurations of the above embodiments, another configuration can be added, deleted, or replaced.

Each of the above configurations, functions, processing units, processing means, and the like may be implemented by hardware by, for example, designing some or all of the above configurations, functions, processing units, processing means, and the like with an integrated circuit. In addition, each of the above configurations, functions, and the like may be implemented by software by causing a processor to interpret and execute a program that implements each function. Information such as a program, a table, and a file that implement each function can be placed in a recording device such as a memory, a hard disk, or an SSD, or a recording medium such as an IC card, an SD card, or a DVD.

In each of the above drawings, control lines and information lines indicate those considered necessary for explanation, and do not necessarily indicate all control lines and information lines in terms of implementation. In practice, almost all configurations may be considered to be connected to each other.

### Industrial Applicability

The present invention is usable for a language model use system and a language model use method that perform prompt engineering.

### Reference Signs List

- 1: Language model use system
- 2: Prompt processing unit
- 3: Knowledge holding unit
- 4: Language model
- 5: User
- 6: Prompt
- 7: Response
- 8: Information source

FIG. 1
   - 1: LANGUAGE MODEL USE SYSTEM
   - 5: USER
   - 6: PROMPT
   - 7: RESPONSE
   - 2: PROMPT PROCESSING UNIT
   - 3: KNOWLEDGE HOLDING UNIT
   - 4: LANGUAGE MODEL
FIG. 2
   - S01: PROMPT INPUT
   - S02: PROMPT CONTENT EMBEDDING REQUEST
   - S03: EMBEDDING RESPONSE
   - S04: SIMILAR KNOWLEDGE QUERY
   - S05: SIMILAR KNOWLEDGE RESPONSE
   - S06: SIMILAR KNOWLEDGE + PROMPT INPUT
   - S07: RESPONSE
   - S08: RESPONSE OUTPUT
   - S09: RESPONSE ACQUISITION
FIG. 3
   - S11: PROMPT, USER ATTRIBUTE INFORMATION INPUT
   - S12: PROMPT CONTENT EMBEDDING REQUEST
   - S13: EMBEDDING RESPONSE
   - S14: SIMILAR KNOWLEDGE QUERY BASED ON ATTRIBUTE INFORMATION
   - S15: SIMILAR KNOWLEDGE RESPONSE BASED ON ATTRIBUTE INFORMATION
   - S16: SIMILAR KNOWLEDGE + PROMPT INPUT
   - S17: RESPONSE
   - S18: RESPONSE OUTPUT
   - S19: RESPONSE ACQUISITION
FIG. 4
   - 8: INFORMATION SOURCE
   - S21: LATEST INFORMATION REQUEST
   - S22: LATEST INFORMATION RESPONSE
   - S23: LATEST INFORMATION EMBEDDING REQUEST
   - S24: EMBEDDING RESPONSE
   - S25: VECTORIZED LATEST INFORMATION STORAGE
   - S26: VECTORIZED LATEST INFORMATION STORAGE

## Claims

1. A language model use system (1) that inputs text of a prompt (6) designated by a user (5) to a language model (4) and outputs a response (7) obtained from the language model (4) to the user (5), the language model use system (1) comprising
a knowledge holding unit (3) that accumulates information relating to knowledge, wherein
the language model use system (1), based on the prompt (6), acquires knowledge related or similar to the prompt (6) from the knowledge holding unit (3), and inputs the knowledge and the prompt (6) together to the language model (4) to obtain a response (7).

2. The language model use system (1) according to claim 1, wherein
the language model use system (1), based on the prompt (6) and attribute information of the user (5), acquires knowledge related or similar to the prompt (6) from the knowledge holding unit (3).

3. The language model use system (1) according to claim 2, wherein
the attribute information includes information on a genre of an interest target of the user (5), and
when the knowledge related or similar to the prompt (6) is acquired from the knowledge holding unit (3), the language model use system (1) acquires knowledge matching the genre.

4. The language model use system (1) according to claim 2, wherein
the attribute information includes information relating to authority of the user (5), and
when the knowledge related or similar to the prompt (6) is acquired from the knowledge holding unit (3), the language model use system (1) acquires knowledge from an accessible range based on the authority.

5. The language model use system (1) according to claim 2, wherein
the language model use system (1) regularly or irregularly collects knowledge from another information source (8) and accumulates the knowledge in the knowledge holding unit (3).

6. The language model use system (1) according to claim 5, wherein
the knowledge collected from the information source (8) is accumulated in the knowledge holding unit (3) as a history together with information on a time at which the knowledge was collected, and
when the knowledge related or similar to the prompt (6) is acquired from the knowledge holding unit (3), the language model use system (1) acquires knowledge from the history that was latest at a point in time designated by the user (5) based on information on the point in time.

7. A language model use method by an information processing system (1) that inputs text of a prompt (6) designated by a user (5) to a language model (4) and outputs a response (7) obtained from the language model (4) to the user (5), the language model use method comprising:
executing, by the information processing system (1),
a first step of, based on the prompt (6), acquiring, from knowledge accumulated in the information processing system (1), knowledge related or similar to the prompt (6); and
a second step of inputting the acquired knowledge and the prompt (6) together to the language model (4) to obtain a response (7).

8. The language model use method according to claim 7, wherein
in the first step, based on the prompt (6) and attribute information of the user (5), knowledge related or similar to the prompt (6) is acquired from knowledge accumulated in the information processing system (1).
